# EUROPÄISCHE PATENTSCHRIFT

(11) **EP 0 522 035 B1**
(45) Veröffentlichungstag und Bekanntmachung des Hinweises auf die Patenterteilung: **05.10.1994**
(21) Anmeldenummer: 91907278.5
(22) Anmeldetag: 01.04.1991
(51) Int. Cl.: B64C 11/30, B64C 27/46

(54) **PROPELLER MIT VERWINDBAREN BLÄTTERN**
PROPELLER WITH TWISTABLE BLADES
HELICE AVEC PALES POUVANT SUBIR UNE TORSION

(30) Priorität: 30.03.1990 DE 4010211
(43) Veröffentlichungstag der Anmeldung: 13.01.1993
(73) Patentinhaber: Lutz, Ferdinand, 53604 Bad Honnef (DE)
(72) Erfinder: Lutz, Ferdinand, 53604 Bad Honnef (DE)
(74) Vertreter: Vollbach, Hans, Dipl.-Ing.
(86) Internationale Anmeldenummer: EP9100612
(87) Internationale Veröffentlichungsnummer: WO9115399

(56) Entgegenhaltungen:
- FR-A- 752 142
- US-A- 2 244 139
- US-A- 2 584 663

## Beschreibung

Die Erfindung betrifft einen Propeller gemäß dem Oberbegriff des Patentanspruches 1.

Wird ein Propeller zur Erzeugung der Vortriebskraft eines Luftfahrzeugs betrieben, so können bei einem Propeller mit verwindbaren Blättern bei unterschiedlichen Flugzuständen (Start, Steigflug, Reiseflug) über die gesamte Blattlänge optimale Blattanstellwinkel eingehalten werden, mit dem Vorteil eines für diese unterschiedlichen Flugzustände jeweils günstigen Schubes, Wirkungsgrades und einer geringstmöglichen Lärmentwicklung. Beim Einsatz eines Propellers mit verwindbaren Blättern in sogenannten VTOL-Flugzeugen wird der Propeller im Schwebeflug in einer gegenüber der des Reisefluges um 90 Winkelgrade geschwenkten Lage als Rotor verwendet. Auch in einem solchen Fall ermöglicht eine veränderbare Blattverwindung einen optimalen Blattanstellwinkel über die gesamte Blattlänge sowohl in den unterschiedlichen Phasen des Vorwärtsfluges als auch in der Phase des Schwebefluges, im Gegensatz zu einem Propeller mit starrer Blattverwindung, der eine optimale Einstellung mit günstigstem Schub und Wirkungsgrad und geringstmöglicher Lärmentwicklung nur bei einem einzigen, durch den Auslegungspunkt vorgegebenen Betriebszustand besitzt.

Konstruktive Lösungen für einen Propeller mit verwindbaren Blättern sind mehrfach vorgeschlagen worden. Aus der DE-OS 21 64 648 ist beispielsweise bekannt geworden, über ein Bändersystem innerhalb des Propellerblattes in Verbindung mit einem starren Hauptholm und anliegenden konischen Verstellrohren eine veränderliche Verwindung des Blattes zu ermöglichen. In der DE-OS 15 31 475 und der DE-AS 1531 476 ist ein Propeller mit einer veränderlichen Verwindung des Blattes beschrieben, bei dem die Verwindung durch auf einem Holm in schraubenförmigen Nuten geführte und auf dem Holm axial verschiebbare Rippen erreicht wird. Nach der DE-AS 12 81 271 können Blatthohlräume durch unterschiedliche fluidische Füllung um die Blattachse gedreht werden, wodurch eine veränderliche Blattverwindung ermöglicht werden soll.

Nachteile der bekannten konstruktiven Vorschläge für den Aufbau eines Propellers mit verwindbaren Blättern sind deren nur bedingte Eignung für den Betrieb unter hohen Fliehkraftbeanspruchungen und darüber hinaus der recht komplizierte Blattaufbau.

Ein Propeller der eingangs genannten Art ist aus der US-PS 26 27 928 bekannt geworden. Die einzelnen auf einem Blattholm drehbar angeordneten Rippen sind an der Vorderkante des Blattes mit je einem Versteifungsglied und an der Hinterkante mit je einem Blattfederelement verbunden. Bei einem Verstellvorgang der äußersten Rippe gegen die innerste Rippe werden die dazwischen liegenden Rippen durch die das Blatt umschließende elastische Außenhaut mitgenommen. Da insbesondere die Blattfederelemente eine Art Kette bilden, die sich unter dem Einfluß der Fliehkraft unvorhersehbar verformt, ergeben sich im Betrieb Biege- und Torsionsschwingungen, die die Vorteile der Verstellbarkeit wieder zunichte machen.

Ein weiteres Beispiel für einen Propeller der eingangs genannten Art ist in der US-A-2 584 663 angegben. Dort soll durch zwei parallel zum Holm verlaufende Stabelemente, die die einzelnen um den Holm drehbaren Rippen untereinander verbinden, eine Verdrehung der Rippen gegeneinander und damit eine Verwindung des Propellerblattes erzwungen werden, wenn die innerste Rippe gegen den mit der Blattspitze fest verbundenen Holm verdreht wird. Es erfolgt eine Fixierung der Stabelemente an den Rippen bei einer voreingestellten Verwindung des Propellerblattes. Notwendigerweise ergibt bei einer solchen konstruktiven Auslegung eine Änderung der Verwindung gegenüber dem voreingestellten Wert eine Torsion und Biegung dieser Stabelemente und der Rippen; die Verwindung des Blattes verlangt also eine Verwindung der durch Stabelemente und Rippen gegebenen grundsätzlich steifen, aber notwendigerweise etwas elastischen Gitterstruktur und damit hohe Verstellkräfte. Die grundsätzlichen Nachteile der bekannten Lösungen, nämlich die Möglichkeit von Biege-- und Torsionsschwingungen insbesondere unter hohen Fliehkräften ebenso wie ein komplizierter Aufbau und hohe Verstellkräfte kennzeichnen also auch dieses Beispiel.

Aufgabe der Erfindung ist es, einen Propeller der eingangs genannten Art zu schaffen, bei dem einerseits die hohen Fliehkraftbeanspruchungen des Blattes ausreichend aufgefangen werden, trotz der für eine Veränderbarkeit der Verwindung notwendigen elastischen Bereiche, und bei dem insbesondere die Kopplung zwischen benachbarten Rippen so erfolgt, daß eine unerwünschte Verstellung der elastischen Bereiche durch Einwirkung der Fliehkraft sowie eine daraus resultierende unerwünscnte Verstellung des Blattgeometrie bei einfachem Aufbau des Blattes verhindert ist.

Diese Aufgabe wird erfindungsgemäß durch die kennzeichnenden Merkmale des Anspruches 1 gelöst.

Durch die erfindungsgemäße Verbindung der verdrehbar auf dem Holm angeordneten Rippen mit Hilfe eines oder mehrerer jeweils wenigstens drei Rippen übergreifenden und untereinander verbindenden Stabelementes, das bzw. die in der durch Holm und Stabelement aufgespannten Ebene biegeweich, in der dazu senkrechten Ebene dagegen vergleichsweise biegesteif gestaltet ist bzw. sind, erhält man vorteilhaft eine konstruktiv sehr einfache Grundstruktur eines verwindbaren Propellerblattes. Das erfindungsgemäß ausgestaltete und eingebaute Stabelement wird bei einer durch äußere Krafteinleitung erfolgten Verdrehung zweier Rippen relativ zueinander entlang einer Schraubenlinie verformt, wobei alle Rippen durch das Stabelement bzw. die Stabelemente auf dem Holm so verdreht werden, daß eine kontinuierliche Verwindung der durch die Rippen gegebenen Blattgrundstruktur erfolgt.

Wie die Verstellung der Rippen erfolgen kann, ist dem Anspruch 2 zu entnehmen. Wesentlich ist, daß zwei Rippen, die von einem Stabelement überdeckt werden, gegeneinander verstellt werden. In besonders vorteilhafter Weise werden die innere, an der Blattwurzel befindliche, und die äußere, an der Blattspitze angeordnete Rippe gegeneinander verdreht; die anderen Rippen werden von dem Stabelement oder von den Stabelementen in die gewünschten Zwischenstellungen gezwungen.

Eine weitere Ausgestaltung der Erfindung ist dem Anspruch 4 zu entnehmen. Durch diese Ausbildung der Verbindungsstellen der Rippen mit einem Stabelement in solcher Weise, daß das Stabelement innerhalb eines konstruktiv vorgegebenen Spieles entlang der Stabelement längsacnse gegenüber den Rippen verschiebbar ist, erfolgt bei Verdrehung zweier Rippen gegeneinander vorteilhaft keine Zug- oder Stauchkraft auf das Stabelement. Vorteilhaft ist durch diese Gestaltung sowie durch die Fixierung der Rippen gegen seitliches Verschieben auf dem Holm gewährleistet, daß die auf die Rippen wirkenden Fliehkräfte beim Betrieb des Propellers nicht von dem Stabelement aufgefangen werden müssen und daß somit die Wirkung der Fliehkräfte auf das Stabelement und damit mittelbar auf die Verstelleinrichtung vorteilhaft gering ist.

In einer solchen Ausführung entstehen bei einer Blattverwindung zwischen zwei benachbarten Rippen an der Blattoberfläche zwangsweise kleine Höhensprünge, die vom Holm in Richtung Blattprofilnase bzw. Blatthinterkante hin zunehmen. Diese Höhensprünge können in besonders vorteilhafter Weise durch die Anwendung der Merkmale des Anspruches 5 egalisiert werden.

Eine bevorzugte Ausgestaltung der Erfindung kann darin bestehen, daß gemäß Anspruch 6 die Rippen in Rippensegmente unterteilt sind, die um die quer zum Holm verlaufende Längsachse der Rippen gegeneinander verdrehbar sind. Dadurch wird erreicht, daß sich die Rippen besser der Verwindung anpassen können, so daß vorteilhaft die angesprochenen Höhensprünge zwischen den Rippen bei einer Blattverwindung vernachlässigbar klein werden. Diese Anpassung der einzelnen Rippensegmente an die Blattverwindung kann gemäß Anspruch 7 durch eine unverdrenbar mechanische Verbindung von Rippensegmenten mit einem ihnen zugeordneten Stabelement erfolgen, oder auch gemäß Anspruch 16 durch die Kraftwirkung einer das Propellerblatt umhüllenden elastischen Schicht, oder durch das Ausfüllen der Zwischenräume zwischen den Rippen durch ein zahelastisches Material gemäß Anspruch 15.

Die Verdrehung der Rippensegmente gegeneinander, also die Tordierung der einzelnen Rippen, kann auch dann vorteilhaft erzeugt werden, wenn die Rippen mit der Verstelleinrichtung gemäß den kennzeichnendnen Merkmalen eines oder mehrerer der Ansprüche 8 bis 13 ausgebildet sind.

Durch diese erfindungsgemäße Gestaltung der Verstelleinrichtung in der Weise, daß gleichzeitig mit der Blattverwindung auch eine Torsion der einzelnen Rippen erfolgt, wird vorteilhaft eine kontinuierliche Blattoberfläche ohne große Höhensprünge auf vergleichsweise einfache Weise erreicht. Durch mindestens zwei nebeneinander liegende Eingriffsstellen der Verstelleinrichtung, an denen eine geringfügig unterschiedliche Verdrehung der Rippe gegenüber dem Holm eingeleitet wird, läßt sich die Torsion der Rippen vergleichweise einfach erreichen. Als Grundstruktur der Rippen können erfindungsgemäß die der Profilkontur entsprechend angepaßten und geformten flachen Elemente aus nicht elastischem Werkstoff verwendet werden, wodurch vorteilhaft einerseits die hohen Flienkräfte eines umlaufenden Propellerblattes beherrscht werden können und andererseits die geforderte Tordierbarkeit in geringem Umfang gegeben ist. Zur Erhöhung der für die Tordierbarkeit notwendigen Flexibilität können erfindungsgemäß Schlitze in die Elemente eingebracht werden. Gegebenenfalls können diese Elemente an einer oder an mehreren Stellen gegen verformende und die Profilkontur verändernde Kräfte abgestützt werden. In besonders vorteilhafter Ausgestaltung der Erfindung sind pro Rippen mehrere auf dem Holm drehbare, in Rippenlängsachse, also quer zum Holm verlaufende Rippenstäbe vorhanden, die einerseits die der Profilkontur folgende Elemente tragen und an denen andererseits die Verstelleinrichtung, also die Stabelemente, angreift, wobei die bei zwei benachbarten Rippenstäben einer Rippe eingeleitete Verdrehung geringfügig unterschiedlich ist, so daß dadurch gleichzeitig eine Torsion der Rippen erfolgt. In zweckmäßiger Weise verlaufen zwei Stabelemente parallel zum Holm, und zwar blattvorderkantenseitig und blatthinterkantenseitig, so daß die Eingriffsstellen beidseitig zum Holm angeordnet sind. Die Rippenstäbe sind mittels Lagerringen auf dem Holm drehbar gelagert, diese Lagerringe können dann so ausgebildet sein, daß sie zur Abstützung der Elemente gegen die verformende und die Profilkontur verändernde Kräfte benutzt werden.

Anhand der Zeichnung, in der zwei Ausgestaltungen der Erfindung dargestellt sind, sollen die Erfindung sowie weitere vorteilhafte Ausgestaltungen und Verbesserungen und weitere Vorteile näher erläutert und beschrieben werden.
Es zeigen:
- Fig. 1: eine teilweise geschnitte Ansicht einer ersten Ausgestaltung eines erfindungsgemäßen Propellers,
- Fig. 2: eine perspektivische Teilansicht einer zweiten Ausgestaltung eines Propellers und
- Fig. 3: eine Schnittansicht nach der Schnittlinie III-III der Fig. 2.

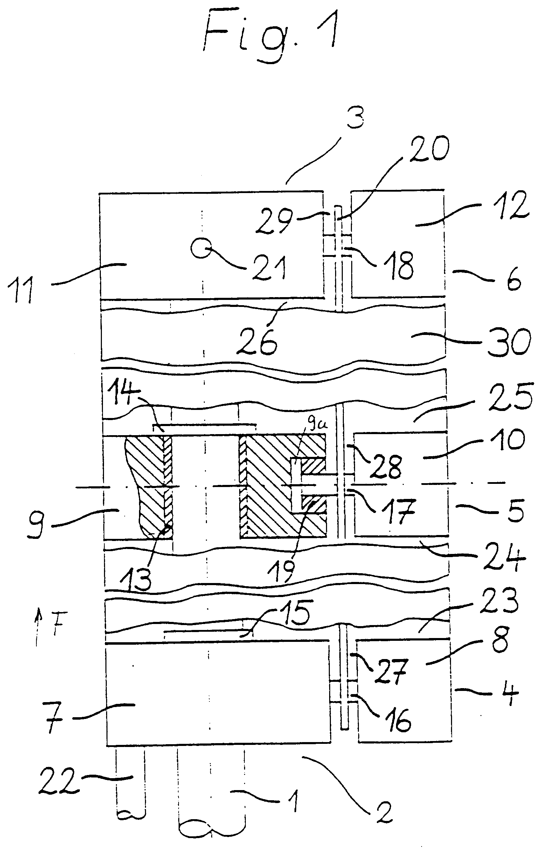

Es sei nun bezug genommen auf die Fig. 1
Die Fig. 1 zeigt einen Teil eines erfindungsgemäßen Propellers. Er besitzt einen torsions- und biegesteifen sowie zugfesten zylindrisch ausgebildeten Holm 1, auf dem von der Blattwurzel 2 bis zur Blattspitze 3 hin Rippen 4 , 5 und 6 drehbar um den Holm angeordnet sind. Jede dieser Rippen ist aus Rippensegmenten 7, 8; 9, 10; 11,12 aufgebaut, wobei das erste Rippensegment 7,9, 11 jeder Rippe in einer Hülse 13 (siehe Rippensegment 9) auf dem Holm 1 um dessen Achse drehbar gelagert ist. Auf dem Holm sind weiterhin Ringe 14, 15 befestigt, mit denen das erste Rippensegment gegen seitliches Verschieben auf dem Holm 1 in Folge der betriebsmäßigen Fliehkraft, die in Pfeilrichtung F wirkt, gesichert ist. Das zweite Rippensegment 8, 10, 12 jeder Rippe ist mit dem ersten Rippensegment 7, 9, 11 jeweils mittels eines zylindrischen Bolzens 16, 17, 18 verbunden.

Innerhalb des holmabseitigen Endabschnittes besitzt jedes Rippensegment 7,9,11 eine Vertiefung, von denen nur die Vertiefung 9a des Rippensegmentes 9 zu sehen ist. In diese Vertiefungen 9a sind Hülsen 19 eingelassen, in denen die Bolzen 16, 17 und 18 drehbar gelagert sind. Da die zweiten Rippensegmente 8,10,12 mit den Bolzen 16, 17 ,18 fest verbunden sind, sind die zweiten Rippensegmente 8,10,12 mit den vorderen Rippensegmenten 7,9,11 über die Bolzen 16 bis 18 drehbar verbunden.

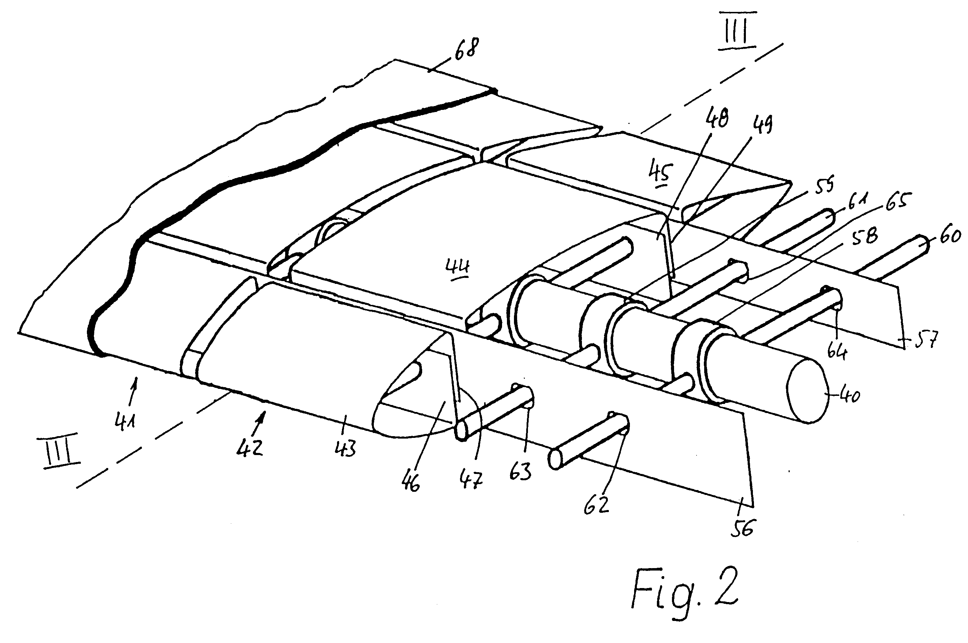

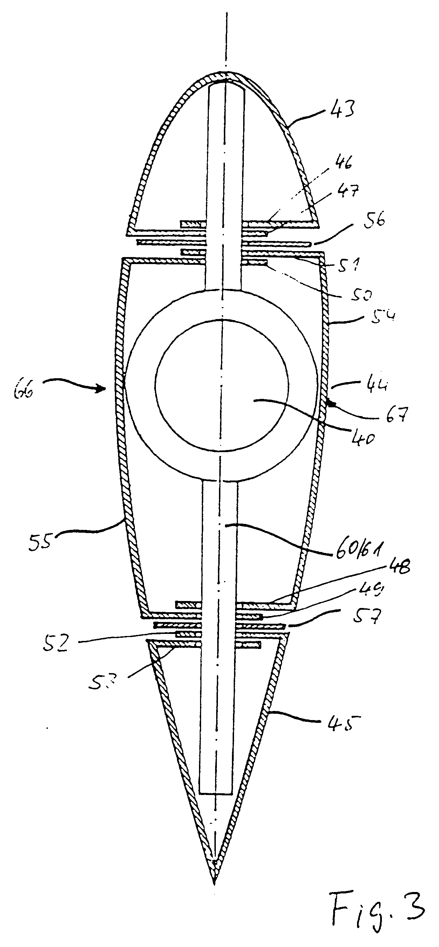

Die drei Rippen 4, 5 und 6 sind von einem Stabelement 20 überdeckt, welches parallel zu dem Holm 1 auf dessen der Blatthinterkante zugewandten Seite verläuft. Das Stabelement 20 ist jeweils im Bereich der Bolzen 16 bis 18 mit den Rippen 4,5 und 6 verbunden, wobei die Bolzen 16, 17, 18 jeweils durch in der Fig. 1 nicht sichtbare Langlöcher in dem Stabelement 20 hindurchgeführt sind. Das Stabelement 20 ist als flaches Band mit langgestreckt rechteckigem Querschnitt, wie z.B. das entsprechende Stabelement der Ausführung nach den Figuren 2 und 3 gestaltet und in der Fig. 1 lediglich mit seiner Schmalseite zu erkennen. Es ist aufgrund seiner Querschnittsform erfindungsgemäß biegeweich innerhalb der vom Propellerblatt aufgespannten Ebene und biegesteif in der dazu senkrechten Ebene. Mit anderen Worten: es kann leicht um eine senkrecht zur Zeichenebene verlaufenden Achse verbogen werden und besizt hier eine geringe Biegesteifigkeit, wogegen es um eine Achse, die in der Zeichenebene liegt und den Drehachsen der Bolzen 17 entspricht und senkrecht zu der Längsachse des Holmes ausgerichtet ist, eine hohe Biegesteifigkeit aufweist.

Die Bolzen 16, 17 und 18 sind in zweckmäßiger Weise rechteckförmig im Querschnitt ausgebildet, und zwar in dem Bereich, in dem sie durch das Langloch des Stabelementes 20 geführt sind. Dadurch wird eine verdrehfreie mechanische Verbindung zwischen dem Stabelement 20 und den zweiten Rippensegmenten 8, 10 un 12 erreicht.

Die äußere, an der Blattspitze 3 angeordnete Rippe 6 ist mittels eines das Rippensegment 11 und den Holm 1 quer durchdringenden Stiftes 21 auf dem Holm 1 unverdrehbar fixiert. Die innere, an der Blattwurzel 2 angeordnete Rippe 4 ist über eine Verstellvorrichtung, von der in der Fig. 1 lediglich ein die Verstellkraft übertragender Zapfen 22 zu sehen ist, der mit dem ersten Rippensegment 7 der Rippe 4 festverbunden ist, gegenüber dem Holm 1 verdrehbar. Die zwischen den Rippen 4 bis 6 befindlichen Zwischenräume 23, 24, 25 und 26 sowie die Zwischenräume 27 bis 29 zwischen den ersten und den zweiten Rippensegmenten sind vorteilhaft mit elastischem Material ausgefüllt, wogegen die Rippensegmente selbst aus hartem Material sind, das sich auch unter dem Einfluß hoher Fliehkräfte nicht oder nur geringfügig elastisch verformt.

Das Propellerblatt ist von einer auf den Rippen 4 bis 6 bzw. Rippensegmenten 7 bis 12 aufliegenden, elastischen, dünnen Schicht 30 umgeben.

Eine weitere Ausführung der Erfindung ist den Fig. 2 und 3 zu entnehmen.

Ein Propellerblatt gemäß der Fig. 2 besitzt einen torsions- und biegesteifen Holm 40, auf dem Rippen 41, 42 drehbar gelagert sind. Jede dieser Rippen besitzt der Profilkontur entsprechend geformte flache Elemente 43, 44, 45, von denen das Element 43 die Blattnase und das Element 45 die Blatthinterkante des Propellerblattes bildet. Demgemäß sind die Elemente 43 und 45 kastenartig praktisch geschlossen geformt, wobei ihre dem Holm zugewandten, innenliegende Wände durch Überlappung der Enden 46, 47 bzw. 52, 53 der flachen Elemente 43, 45 gebildet sind. Das mittlere Element 44 ist aus zwei U-förmigen Teilelementen 54 und 55 zusammengesetzt, deren Schenkel 48, 49 bzw. 50, 51 sich ebenfalls überlappen und dadurch die beiden Elemente 54 und 55 einen geschlossenen Kasten bilden. Als Verstelleinrichtung zum Verdrehen der Rippen 41, 42 auf dem Holm 40 dienen zwei parallel zu dem Holm 40 verlaufende erfindungsgemäße Stabelemente 56 und 57.

Jede Rippe 41, 42 besitzt zwei nebeneinander angeordnete, in Rippenlängsachse und senkrecht zum Holm 40 verlaufende Rippenstäbe 60, 61, die mit jeweils einem Lagerring 58, 59 fest verbunden sind, mit denen sie auf dem Holm 40 drehbar gelagert sind. Die Lagerringe 58 und 59 umfassen den Holm 40. Die Stabelemente 56 und 57, die beidseitig zu dem Holm und parallel zu diesem verlaufen sowie in gleicher Weise ausgebildet und angeordnet sind, wie das Stabelement 20 der Fig. 1, sind von den Rippenstäben 60,61 durchgriffen, wobei die Stabelement 56 und 57 Langlöcher 62, 63 bzw. 64 und 65 aufweisen, die bei der Veränderung der Blattverwindung eine gewisse Beweglichkeit der Stabelemente 56 und 57 bezogen auf die Rippenstäbe 60 und 61 gestatten.

Über die beiden Rippenstäbe 60 und 61 werden die einzelnen Rippen 41, 42 um ihre Rippenlängsachse tordiert. Mit anderen Worten: Über die Langlöcher 62, 62; 64,65 sind die Stabelemente 56, 57 mit den Rippenstäben 60, 61 verbunden und leiten auf die Rippenstäbe und damit auf die Rippen die Verstellkräfte ein.

Die Rippenstäbe 60, 61 verlaufen durch die sich überlappenden Enden der Elemente 43,44,45, so daß auch die Elemente 43 bis 45 mit den Rippenstäben 60,61 verbunden sind.
Wenn jiese von den Stabelementen 56 und 57 auf dem Holm 40 unterschiedlich verdreht werden, daß sich die Stabelemente 56, 57 auf eine Schraubenlinie einstellen und die Rippenstäbe 60,61 dieser Verstellung folgen müssen, verdrehen sich die als Rippensegmente dienende Elemente 43 bis 45 gegeneinander und in sich, so daß eine glatte Gesamtoberfläche gebildet wird. An zwei Stellen 66, 67 sind die Teilelemente 54 und 55 gegen von außen einwirkende, die Profilkontur verändere Kräfte auf den Lagerringen 59, 58 abgestützt. Das Propellerblatt ist von einer auf den Elementen 43 bis 45 aufliegenden dünnen elastischen Schicht 68 umgeben (siehe Fig. 2).

## Patentansprüche

1. Propeller mit verwindbaren Blättern, mit einem Holm (1,40) auf dem Rippen (4,5,6; 41,42) angeordnet sind, die um die Achse des Holms (1,40) gegeneinander mittels einer Verstelleinrichtung verdrehbar sind, sowie mit mindestens einem, parallel zum Holm verlaufenden Stabelement (20;56,57), das als Kopplungsmittel bei Verdrehung zweier Rippen gegeneinander über die Verstelleinrichtung die anderen Rippen zwangsläufig mitverstellt, dadurch gekennzeichnet, daß das Stabelement (20;56,57) in der durch Holm (1,40) und Stabelement (20;56,57) aufgespannten Ebene vergleichsweise biegeweich und in der dazu senkrechten Ebene vergleichsweise biegesteif ausgestaltet ist und wenigstens drei Rippen (4,5,6;41,42) miteinander koppelt, dergestalt, daß das wenigstens eine Stabelement sich bei der Verdrehung zweier Rippen gegeneinander entlang einer Schraubenlinie um den Holm herum verformt und die weiteren Rippen auf der Schraubenlinie mitnimmt.

2. Propeller nach Anspruch 1, dadurch gekennzeichnet, daß eine erste, auf dem Holm (1) angeordnete Rippe (4,5,6), vorzugsweise die äußere an der Blattspitze (3) angeordnete Rippe (6), auf dem Holm unverdrehbar fixiert ist und daß eine zweite auf dem Holm angeordnete Rippe, vorzugsweise die innere an der Blattwurzel (2) angeordnete Rippe (4), über eine Verstelleinrichtung über dem Holm verdrehbar ist.

3. Propeller nach einem der Ansprüche 1 und 2, dadurch gekennzeichnet, daß die Verbindungsstellen der Rippen (4 bis 6) mit dem Stabelement (20) drehbar um die durch die Längsrichtung der Rippen gegebenen Achsen ausgebildet sind.

4. Propeller nach einem der Ansprüche 1 bis 3 , dadurch gekennzeichnet, daß die Verbindungsstellen der Rippen (4 bis 6) mit dem Stabelement (20; 56, 57) derart ausgebildet sind, daß das Stabelement innerhalb der durch Stabelement und Holm (1,40) aufgespannten Ebene innerhalb eines konstruktiv vorgegebenen Spiels in seiner Längsachse und damit gegenüber den Rippen verschieblich ist.

5. Propeller nach einem der vorhergehenden Ansprüche, dadurch gekennzeichnet, daß die auf dem Holm (1, 40) angeordneten Rippen (4 bis 6; 41, 42) torsiensweich um ihre Rippenlängsachse ausgebildet sind und bei Verstellung der Rippen gegeneinander gleichzeitig um ihre Rippenlängsachse tordiert werden.

6. Propeller nach Anspruch 5,dadurch gekennzeichnet, daß die auf dem Holm (1, 40) drehbar angeordneten Rippen (4,5,6;41 ,42) in Rippensegmente (7,8,9,10,11,12; 43,44,45) entlang der Längsachse der Rippen unterteilt sind, daß diese Rippensegmente um die Längsachse der Rippen gegeneinander verdrehbar sind und daß erste Rippensegmente (7,9,11) auf dem Holm drehbar gelagert sind.

7. Propeller nach Anspruch 6, dadurch gekennzeichnet, daß mit den ersten Rippensegmenten (7,9,11) direkt oder indirekt verbundene zweite Rippensegmente (8,10,12) mit einem ihnen zugeordneten Stabelement (20) drehfest verbunden sind.

8. Propeller nach einem der Ansprüche 5 bis 7, dadurch gekennzeichnet, daß die Rippen (41,42) oder die Rippensegmente (43,44,45) auf wenigstens einem in Längsrichtung der Rippen und senkrecht zum Holm (40) verlaufenden, auf dem Holm drehbar angeordneten Rippenstab (60,61) gelagert sind, welcherhöchstens annähernd über die gesamte Profiltiefe verlauft und mit wenigstens einem Stabelement (56,57) derart gekuppelt sind, daß dieses bei Verdrehung der Rippen gegeneinander die Rippenstäbe unterschiedlich auf dem Holm verdreht und eine Torsion der Rippen bzw. eine Verdrehung der Rippensegmente gegeneinander bewirkt.

9. Propeller nach Anspruch 8, dadurch gekennzeichnet, daß mindestens zwei Rippenstäbe (60, 61) für jede Rippe vorgesehen sind, die mit mindestens einem Stabelement (56, 57) verbunden sind, dergestalt, daß das wenigstens eine Stabelement bei Verstellung die Rippenstäbe unterschiedlich auf dem Holm verdreht.

10. Propeller nach einem der vorhergehenden Ansprüche, dadurch gekennzeichnet, daß jede Rippe als Grundstruktur ein oder mehrere, der Profilkontur folgende flache Rippenelemente (43, 54,55, 45) aus nicht elastischem Werkstoff aufweist.

11. Propeller nach Anspruch 10, dadurch gekennzeichnet, daß die flachen Rippenelemente aus nicht elastischem Werkstoff der Grundstruktur der Rippen entsprechend geschlitzt sind, vorzugsweise in Richtung der Längsachse.

12. Propeller nach einem der Ansprüche 10 und 11, dadurch gekennzeichnet, daß die der Profilkontur folgenden flachen Rippenelemente aus nicht elastischem Werkstoff an einer oder mehreren Stellen (66,67) gegen verformende und die Profilkontur verändernde Kräfte aufgestützt sind.

13. Propeller nach einem der Ansprüche 10 bis 12, dadurch gekennzeichnet, daß die dar Profilkontur folgenden flachen Rippenelemente mit den Rippenstäben (60,61) mechanisch verbunden sind.

14. Propeller nach Anspruch 13, dadurch gekennzeichnet, daß die die Blattvorderkante bildenden Rippenelemente ebenso wie die die Blatthinterkante bildenden Rippenelemente (43,45) kastenförmig ausgebildet sind, wobei ihre Endbereiche (46,47; 52,53) sich überlappend ausgebildet sind, daß die dazwischen befindlichen Rippenelemente (54,55) U-förmig ausgebildet sind, wobei die Schenkelenden (48,49; 50,51) der aufeinander zuweisenden Schenkel der beiden Rippenelemente (54,55) sich überlappen, und daß die Rippenstäbe (60,61) durch die sich überlappenden Bereiche hindurchgreifen.

15. Propeller nach einem der vorhergehenden Ansprüche, dadurch gekennzeichnet, daß zwischen den auf dem Holm (1, 40) drehbar angeordneten Rippen (4 bis 6; 41,42 ) bzw. zwischen den Rippensegmenten Zwischenräume vorhanden sind, die vorzugsweise durch zähelastischen Kunststoffschaum oder anderes zähelastisches Material ausgefüllt sind.

16. Propeller nach einem der vorhergehenden Ansprüche, dadurch gekennzeichnet, daß das Propellerblatt mit einer elastischen Schicht (30,68) umhüllt ist.

17. Propeller nach einem der vorhergehenden Ansprüche, dadurch gekennzeichnet, daß der Holm (1, 40) um seine Achse verdrehbar ist.

18. Propeller nach einem der vorhergehenden Ansprüche, dadurch gekennzeichnet, daß die Rippen ( 4 bis 6) aus Stäben bestehen und die Profilform des Propellerblattes durch Umschäumen der durch den Holm (1), Rippen und Stabelemente (20) gegebenen Grundstruktur gebildet ist.

19. Propeller nach einem der vorhergehenden Ansprüche, dadurch gekennzeichnet, daß das oder die Stabelemente (20; 56, 57) nach Art eines Flachbandes ausgebildet ist bzw. sind.

20. Propeller nach einem der vorhergehenden Ansprüche, dadurch gekennzeichnet, daß die um den Holm (1) drehbeweglichen Rippen (4, 5, 6) in Fliehkraftrichtung durch Anschlagringe (14, 15) auf dem Holm gesichert sind.

## Claims

1. Propeller having warpable blades, which comprises a spar (1, 40) on which are arranged ribs (4, 5, 6; 41, 42) which by means of an adjusting device are twistable relative to one another about the axis of the spar (1, 40), and also comprising at least one bar element (20; 56, 57) which extends parallel to the spar and which, as a coupling means, on the twisting of two ribs relative to one another also adjusts the other ribs by constraint with the aid of the adjusting device, characterized in that the bar element (20; 56, 57) is constructed to be comparatively flexurally soft in the plane spanned by the spar (1, 40) and the bar element (20; 56, 57) and comparatively flexurally stiff in the plane at right angles thereto and couples to one another at least three ribs (4, 5, 6; 41, 42), in such a manner that on the twisting of two ribs relative to one another the at least one bar element is deformed along a helical line around the spar and carries the other ribs with it on the helical line.

2. Propeller according to Claim 1, characterized in that a first rib (4, 5, 6) arranged on the spar (1), preferably the outer rib (6) arranged at the blade tip (3), is untwistably fixed on the spar, and in that a second rib arranged on the spar, preferably the inner rib (4) arranged at the blade root (2), is twistable relative to the spar by means of an adjusting device.

3. Propeller according to one of Claims 1 and 2, characterized in that the connection points of the ribs (4 to 6) to the bar element (20) are designed for rotation about the axes formed by the longitudinal direction of the ribs.

4. Propeller according to one of Claims 1 to 3, characterized in that the connection points of the ribs (4 to 6) to the bar element (20; 56, 57) are so designed that within the plane spanned by the bar element and the spar (1, 40), the bar element is displaceable, within a clearance dictated by design, in its longitudinal axis and therefore relative to the ribs.

5. Propeller according to one of the preceding claims, characterized in that the ribs (4 to 6; 41, 42) arranged on the spar (1, 40) are designed to be weak in respect of torsion about their longitudinal rib axes and on the adjustment of the ribs relative to one another are at the same time twisted about their longitudinal rib axes.

6. Propeller according to Claim 5, characterized in that the ribs (4, 5, 6; 41, 42) arranged for rotation on the spar (1, 40) are subdivided into rib segments (7, 8, 9, 10, 11, 12; 43, 44, 45) along the longitudinal axis of the ribs, in that these rib segments are twistable about the longitudinal axis of the ribs relative to one another, and in that first rib segments (7, 9, 11) are rotatably mounted on the spar.

7. Propeller according to Claim 6, characterized in that second rib segments (8, 10, 12), which are directly or indirectly connected to the first rib segments (7, 9, 11), are fixed to an associated bar element (20) for rotation therewith.

8. Propeller according to one of Claims 5 to 7, characterized in that the ribs (41, 42) or the rib segments (43, 44, 45) are mounted on at least one rib rod (60, 61), which extends in the longitudinal direction of the ribs and at right angles to the spar (40) and is arranged for rotation on the spar and which extends at least approximately over the entire profile depth, and are coupled to at least one bar element (56, 57) in such a manner that on the twisting of the ribs relative to one another said bar element twists the rib rods differently on the spar and brings about a torsion of the ribs or a twisting of the rib segments relative to one another.

9. Propeller according to Claim 8, characterized in that at least two rib rods (60, 61) are provided for each rib and are connected to at least one bar element (56, 57) in such a manner that the at least one bar element is twisted differently on the spar on adjustment of the rib rods.

10. Propeller according to one of the preceding claims, characterized in that each rib has as its skeletal structure one or more flat rib elements (43, 54, 55, 45) of non-elastic material, which follow the profile contour.

11. Propeller according to Claim 10, characterized in that the flat rib elements of non-elastic material are slotted in accordance with the skeletal structure of the ribs, preferably in the direction of the longitudinal axis.

12. Propeller according to one of Claims 10 and 11, characterized in that the flat rib elements of non-elastic material, which follow the profile contour, are given support at one or more points (66, 67) against deforming forces which change the profile contour.

13. Propeller according to one of Claims 10 to 12, characterized in that the flat rib elements which follow the profile contour are mechanically connected to the rib rods (60, 61).

14. Propeller according to Claim 13, characterized in that the rib elements forming the leading edge of the blade and also the rib elements (43, 45) forming the trailing edge of the blade have a box-shaped configuration, their end regions (46, 47; 52, 53) being designed to overlap, in that the rib elements (54, 55) situated there-between have a U-shaped configuration and the ends (48, 49; 50, 51) of the legs pointing towards one another of the two rib elements (54, 55) overlap, and in that the rib rods (60, 61) extend through the overlap regions.

15. Propeller according to one of the preceding claims, characterized in that between the ribs (4 to 6; 41, 42) arranged for rotation on the spar (1, 40) or between the rib segments there are formed gaps which are preferably filled with viscoelastic foamed plastic material or other viscoelastic material.

16. Propeller according to one of the preceding claims, characterized in that the propeller blade is covered over by an elastic layer (30, 68).

17. Propeller according to one of the preceding claims, characterized in that the spar (1, 40) is twistable about its axis.

18. Propeller according to one of the preceding claims, characterized in that the ribs (4 to 6) consist of rods and the profile shape of the propeller blade is formed by applying foamed material around the skeletal structure formed by the spar (1), ribs and and bar elements (20).

19. Propeller according to one of the preceding claims, characterized in that the bar element or elements (20; 56, 57) has or have a configuration in the style of a flat band.

20. Propeller according to one of the preceding claims, characterized in that the ribs (4, 5, 6) which are rotationally movable around the spar (1) are secured on the spar in the direction of the centrifugal force by means of stop rings (14, 15).

## Revendications

1. Hélice à pales flexibles en torsion, comportant un longeron (1, 40) sur lequel sont montées des nervures (4, 5, 6 ; 41, 42) qui peuvent tourner les unes par rapport aux autres, autour de l'axe du longeron (1, 40), au moyen d'un dispositif de réglage, et comportant au moins un élément en barre (20 ; 56, 57), parallèle au longeron, qui en tant qu'élément d' accouplement, lors de la rotation de deux nervures l'une par rapport à l'autre, contraint les autres nervures à se déplacer aussi , par l'intermédiaire du dispositif de réglage, caractérisée en ce que l'élément en barre (20 ; 56, 57) est relativement flexible dans le plan défini par le longeron (1, 40) et l'élément en barre (20 ; 56, 57) et est relativement rigide à la flexion dans le plan perpendiculaire au premier et accouple entre elles trois nervures (4, 5, 6 ; 41, 42) , de manière qu'un élément en barre au moins se déforme, lors de la rotation de deux nervures l'une par rapport à l'autre, le long d'une ligne hélicoïdale, autour du longeron et entraîne les autres nervures sur la ligne hélicoïdale.

2. Hélice selon la revendication 1, caractérisée en ce qu'une première nervure (4, 5, 6), montée sur le longeron (1), de préférence la nervure (6) extérieure, montée à la pointe (3) de la pale, est fixée sur le longeron de manière à ne pouvoir tourner et en ce qu'une deuxième nervure, montée sur le longeron, de préférence la nervure (4) intérieure, montée à l'emplanture (2) de la pale, peut tourner sur le longeron, par l'intermédiaire d'un dispositif de réglage.

3. Hélice selon l'une des revendications 1 ou 2, caractérisée en ce que les points de liaison des nervures (4 à 6) avec l'élément en barre (20), sont conçus de manière à pourvoir tourner autour des axes définis par la direction longitudinale des nervures.

4. Hélice selon l'une des revendications 1 à 3, caractérisée en ce que les points de liaison des nervures (4 à 6) avec l'élément en barre (20 ; 56, 57) sont conçus de manière que l'élément en barre puisse coulisser à l'intérieur du plan défini par l'élément en barre et le longeron 1, 40), à l'intérieur d'un jeu imposé par la construction, dans son axe longitudinal et donc par rapport aux nervures.

5. Hélice selon l'une des revendications précédentes, caractérisée en ce que les nervures (4 à 6 ; 41, 42), montées sur le longeron (1, 40) sont souples en torsion autour de leur axe longitudinal et peuvent en même temps être tordues autour de leur axe longitudinal lors du déplacement des nervures les unes par rapport aux autres.

6. Hélice selon la revendication 5, caractérisée en ce que les nervures (4, 5, 6 ; 41, 42) montées tournantes sur le longeron (1, 40), sont subdivisées en segments (7, 8, 9, 10, 11, 12 ; 43, 44, 45), le long de leur axe longitudinal, en ce que ces segments de nervure peuvent tourner les uns par rapport aux autres autour de l'axe longitudinal des nervures et en ce que des premiers segments de nervure (7, 9, 11) sont montés tournants sur le longeron.

7. Hélice selon la revendication 6, caractérisée en ce que des seconds segments de nervure (8, 10, 12), reliés directement ou indirectement aux premiers segments de nervure (9, 11), sont solidaires en rotation avec l'élément en barre (20) qui leur est associé.

8. Hélice selon l'une des revendications 5 à 7, caractérisée en ce que les nervures (41, 42) ou les segments de nervure (43, 44, 45) sont montés sur au moins une barre de nervure (60, 61) s'étendant dans la direction longitudinale des nervures et perpendiculairement au longeron (40), montée tournante sur le longeron, laquelle barre s'étend au plus approximativement sur toute la profondeur du profilé et est accouplée avec au moins un élément en barre (56, 57) de telle sorte que celui-ci, lors de la rotation des nervures les unes par rapport aux autres, fait tourner les barres de nervure différemment sur le longeron et entraîne une torsion des nervures ou une rotation des segments de nervures les uns par rapport aux autres.

9. Hélice selon la revendication 8, caractérisée en ce qu'il est prévu pour chaque nervure au moins deux barres de nervure (60, 61) qui sont reliées avec au moins un élément en barre (56, 57), de manière qu'un élément en barre au moins fasse tourner les barres de nervure différemment sur le longeron, lors du déplacement.

10. Hélice selon l'une des revendications précédentes, caractérisée en ce que chaque nervure dans sa structure de base comporte un ou plusieurs éléments de nervure (43, 54, 55, 45) plats, suivant le contour profilé, réalisés dans un matériau non élastique.

11. Hélice selon la revendication 10, caractérisée en ce que les éléments de nervure plats en matériau non élastique sont fendus, conformément à la structure de base des nervures, de préférence dans la direction de l'axe longitudinal.

12. Hélice selon l'une des revendications 10 ou 11, caractérisée en ce que les éléments de nervure plats, suivant le contour profilé, en matériau non élastique, sont soutenus en un ou plusieurs points (66, 67) contre des forces déformantes et modifiant le contour profilé.

13. Hélice selon l'une des revendications 10 à 12, caractérisée en ce que les éléments de nervure plats, suivant le contour profilé, sont reliés mécaniquement avec les barres de nervure (60, 61).

14. Hélice selon la revendication 13, caractérisée en ce que les éléments de nervure, formant le bord d'attaque des pales, de même que les éléments de nervure (43, 45), formant le bord de fuite des pales, sont en forme de caisson, leurs zones d'extrémité (46, 47 ; 52, 53) se recouvrant, en ce que les éléments de nervure (54, 55) se trouvant entre celles-ci sont en U, les extrémités (48, 49 ; 50, 51) des côtés tournés l'un vers l'autre des deux éléments de nervure (54, 55) se recouvrent et en ce que les barres de nervure (60, 61) passent à travers les zones se recouvrant.

15. Hélice selon l'une des revendications précédentes, caractérisée en ce qu'il est prévu entre les nervures (4 à 6 ; 41, 42) montées tournantes sur le longeron (1, 40) ou entre les segments de nervures, des espaces intermédiaires qui sont de préférence remplis par de la mousse synthétique viscoplastique ou par un autre matériau viscoplastique.

16. Hélice selon l'une des revendications précédentes, caractérisée en ce que la pale de l'hélice est enveloppée d'une couche élastique (30, 68).

17. Hélice selon l'une des revendications précédentes, caractérisée en ce que le longeron (1, 40) peut tourner autour de son axe.

18. Hélice selon l'une des revendications précédentes, caractérisée en ce que les nervures (4 à 6) sont des barres et la forme profilée de la pale de l'hélice est formée par une enveloppe de mousse de la structure de base donnée par le longeron (1), les nervures et les éléments en barre (20).

19. Hélice selon l'une des revendications précédentes caractérisée en ce que le ou les éléments en barre (20 ; 56, 57) est ou sont conçus à la manière d'une bande plate.

20. Hélice selon l'une des revendications précédentes, caractérisée en ce que les nervures (4, 5, 6) mobiles en rotation autour du longeron (1), sont bloquées sur le longeron dans la direction des forces centrifuges par des bagues de butée (14, 15).
